# EUROPEAN PATENT APPLICATION

(11) **EP 1 785 894 A1**
(43) Date of publication of application: **16.05.2007**
(21) Application number: 05292256.4
(22) Date of filing: 26.10.2005
(51) Int. Cl.: G06F 17/30

(54) **Method to display a web page in a browser window**

(71) Applicant: Alcatel Lucent, 75008 Paris (FR)
(72) Inventor: Laible, Volker, 70469 Stuttgart (DE)
(74) Representative: Brose, Gerhard

(57) **Abstract**

A method for an appropriate presentation of a web page (10, 11) in a browser window is described, comprising the steps of
- subdividing the web page (10, 11) into different subparts (41, 42, 43, 44, 45, 46, 47, 48),
- displaying a subpart (41, 42, 43, 44, 45, 46, 47, 48) in the browser window (60, 61),
- wherein the display in the browser window (60, 61) can be switched from one subpart (41, 42, 43, 44, 45, 46, 47, 48) to another subpart (41, 42, 43, 44, 45, 46, 47, 48).

Furthermore a terminal and a server to be used to execute said method are described, plus a computer program product comprising computer readable program means for causing a computer to perform said method on a computer.

## Description

### Technical field:

The invention relates to a method for an appropriate presentation of a web page in a browser window, plus a Terminal and a Server to be used to execute said method, plus a computer program product comprising computer readable program means for causing a computer to perform said method on a computer.

### Background of the invention:

Today most web pages are written and tested for desktop computers with large colour monitors. Browsing such web pages with devices having small display sizes, such as e.g. PDAs or smart-phones, can become rather uncomfortable and annoying.

One known solution is that the content provider provides different layouts of a web page so it can be adjusted to the different web-browsers and/or to different end devices with different screen sizes. The main disadvantages of this solution are increased complexity in creating and increased costs in providing such web pages since it requires more work generating layouts that will fit the different screen resolutions and because more storage and computing power is required on the content provider side to provide different layouts due to additional software required. Due to this there are only few web pages adapting to small screen sizes, wherein many web pages, e.g. most web pages of small and medium enterprises do not feature different layouts for reasons of economy.

Another known solution is to reformat the entire layout of the web page on the device used to display the web page, wherein the broadness of the web page is adapted to the width of the browser window, also if the web page features a fixed broadness and the width of the browser window is smaller than the fixed broadness. Thereby when narrowing the web page its length increases significant because of displaying the whole content of the web page in a window smaller than the original layout intended. This leads to the disadvantage of an inadequate interaction, since the need of scrolling the web page increases significant. Particularly on end devices with small screens this is annoying.

### Technical purpose of the invention:

The technical purpose of the invention is to develop a method for an improved presentation of a web page, plus a terminal and a server to be used to execute such a method.

### Disclosure of the invention and its advantages:

The invention's technical purpose is met by the proposed method for an appropriate presentation of a web page in a browser window, that comprises the steps of
- subdividing the web page into different subparts,
- displaying a subpart in the browser window,
- wherein the display in the browser window can be switched from one subpart to another subpart.

To switch between the individual subparts means to switch between the different subparts are provided. Those means can comprise e.g. the assigning of a switching function to one or more control or function keys or to other keys on a keyboard, or to one or more pushbuttons displayed in the browser window and the like, wherein by pushing said keys or by clicking said pushbuttons with a mouse cursor and the like the display in the browser window is changed from one subpart of the web page to another. It is also thinkable that instead of in a browser window the subparts can also be presented on the whole screen particularly on end devices with small screens.

Said method according to the invention has the advantage over the state of the art, that the presentation of web pages is improved because no different layouts are required and because not the whole content of the web page is presented in the browser window anymore but only the content of one subpart. Doing so, interaction particularly in combination with devices having a small screen like e.g. mobile devices such as mobile phones, PDAs, handhelds and the like is improved because endless scrolling is not necessary anymore and retrieval of content is simplified because the user gets additional clues to retrieve content by the subparts the web page is subdivided into.

In a preferred embodiment of the method according to the invention, to switch between the different subparts a scheme of the layout of the web page showing symbolically the different subparts preferably in relation to the structure of the web page is provided, wherein each symbol on said layout is assigned to a particular subpart and by clicking on a symbol the assigned subpart is displayed in the browser window. Thereby it is thinkable that the scheme is displayed in an own navigation window, wherein the different subparts are accessed by clicking on the corresponding symbols in the navigation window. Said navigation window can be a part of the browser window or can be integrated in the frame or the headline of the browser window.

In another preferred embodiment of the method according to the invention, the different subparts are labelled. It is thinkable that the different subparts are labelled according to their arrangement in the layout of the web page, like e.g. 'part 1', 'part 2' and the like, or that they are labelled content related.

In an additional preferred embodiment of the method according to the invention, for each subpart a tab with a label corresponding to the label of the subpart is placed on the browser window, wherein the different subparts are accessed by clicking on the corresponding tab.

In a particularly preferred embodiment of the method according to the invention, instead of displaying one subpart in the browser window each subpart is assigned to an own browser window and instead of switching the display in the browser window it can be switched between the browser windows assigned to different subparts. Thereby the browser windows used to display the individual subparts preferably provide means to switch between the different subparts.

In a preferred embodiment of the method according to the invention, the web page is subdivided into its frames or into groups of its frames, so that each frame or each group of frames forms a subpart of the web page. Alternatively or additional it is also thinkable that the web page is subdivided into its cells or into groups of its cells, so that each cell or each group of cells forms a subpart of the web page. Said method is particularly easy to be implemented for web pages composed of different frames or tables. However using more complex algorithms, it is also possible to define other rules how a web page can be conveniently subdivided. It is also thinkable that pictures of the web page form own subparts of the web page. In general it is thinkable that subdivision can be individual controlled by the user, e.g. by presetting or by self-learning methods wherein typical schemes the user likes to display the subparts are analyzed and stored, so that after a while the subdivision and the display of the subparts is adapted according to said analyzed schemes.

A preferred embodiment of the invention comprises a terminal to be used to execute the method described above, wherein said terminal comprises a screen and means to display web pages on said screen, means to subdivide a web page into different subparts, means to display a subpart of said web page on said screen and means to switch the display from one subpart to another. Said means to switch the display of the subparts can comprise e.g. one or more control or function keys or other keys of a keyboard and the like assigned to a switching function, one or more pushbuttons to be clicked with a mouse cursor and the like displayed on the screen, means to display a symbolical layout of the web page on said screen, wherein by choosing a symbol assigned to a particular subpart, e.g. by clicking on said symbol, said particular subpart is displayed on the screen. Said terminal can be e.g. a personal computer, a laptop, a device that can be remotely connected with a server, a mobile device like e.g. a mobile phone, a PDA, a handheld and the like.

Another preferred embodiment of the invention comprises a server to be used to execute the method described above, wherein said server comprises means to display web pages on a screen, means to subdivide a web page into different subparts, means to display a subpart of said web page on said screen and means to switch the display from one subpart to another. Said screen can be any mean that can be used to display computer like information, e.g. a monitor of a personal computer or a laptop remotely attached to said server, a TV-set, a display of a mobile device like e.g. a mobile phone, a PDA, a handheld and the like or the screen of a terminal, such as the terminal described above, that is remotely attached to the server. The means to display web pages on a screen comprise means to provide data to be used to display web pages on a screen as well as means to remotely or directly attach a screen to the server.

In an additional preferred embodiment of the invention, said method is performed by a computer program product stored on a computer usable medium comprising computer readable program means for causing a computer to perform the method mentioned above, when said computer program product is executed on a computer. Thereby the term computer also comprises mobile end devices like e.g. mobile phones, PDAs, handhelds and the like as well as terminals like the terminal described above and computer systems comprising a server that is remotely connected with an end device like e.g. such a terminal.

### Brief description of the drawing, with

- Fig. 1: showing a flowchart of a method according to the invention,
- Fig. 2: showing a scheme of a web page comprising a layout with three frames, and showing a scheme how this web page is displayed according to the invention, and
- Fig. 3: showing a scheme of a more complex web page and a scheme how this web page is displayed according to the invention.

### Paths for performing the invention:

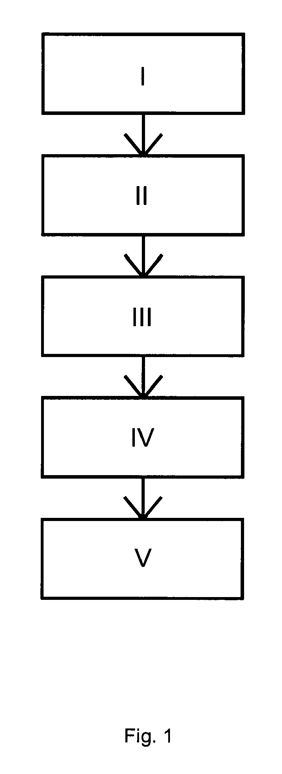

In Fig. 1 the steps to be used to execute the method according to the invention are shown.

In a first step I a web page to be displayed in a browser window is subdivided into different subparts.

In a second step II a symbolical layout of the structure of the web page is generated, showing symbolically the different subparts. Thereby the different subparts are provided with a label.

In a third step III said symbolical layout is displayed in a navigation window.

In a fourth step IV for each subpart a tab with a label corresponding to the label of the subpart is placed on the browser window.

In a fifth step V one subpart of the web page is displayed in the browser window, wherein the display of the individual subparts in the browser window can be switched so that the display in the browser window can be changed from one subpart to another subpart. The different subparts are accessed by clicking on the corresponding tab or by clicking on corresponding symbols in the navigation window.

How a web page can be subdivided depends on its layout. Various methods are thinkable:

### a) Frame to Tab-Window Function

If the web page is composed of frames, the method is rather simple. The layout of a framed web page is described in its own html-document using a <FRAMESET> tag instead of a <BODY> tag. E.g. a frame layout comprising three horizontally aligned frames can be defined as follows:

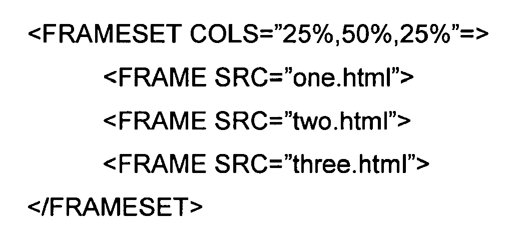

The sources of the frame are described in separate html-documents, here "one.html", "two.html" and "three.html".

The basic frame layout will now be symbolically displayed in a navigation window, while the content of the frames will be placed in a separate tab-window each. The tab labels can be named after the html-file or its abbreviation, in case the file name is too long, or they could be colour coded.

Targeting of frames can also be supported. That is, if a link in frame 'one' will open a page in another frame e.g. frame 'two', tab-window 'two' displaying subpart 'two' will automatically be brought to the front.

### b) Table to Tab-Window Function

A lot of web pages are also composed using, mostly invisible, tables. Here a method similar to the 'Frame to Tab-Window Function' can be used. However, in contrast to frames, the source of table cells is described in the same html-document as the table layout itself, so labelling will be not as straight forward. But it is thinkable to simply number or colour code them or to try to parse a label out of the cell context. Also, table cells can be rather small and therefore the web page might get too fragmented. This can be prevented by defining a rule that a table cell size must be larger then a set minimum cell size before it will be displayed in a separate subpart. Alternatively one can define a rule that a web page can only have a limited amount of subdivision per vertical and horizontal direction. So if a table comprising e.g. twelve equal sized columns and the maximum amount of subdivision in horizontal direction is three, four adjoining table cells will be displayed per subpart.

### c) Merging Function

If a web page gets fragmented into undesired subparts, the user can merge separated parts by marking them in the navigation tab and pressing a button or double tabbing the touchscreen or some similar action. Thereby it is thinkable that by presettings or by self learning algorithms the user can individually control the subdivision of web pages or the subdivision of web pages will be customized automatically.

### d) Picture to Tab-Window

The picture to tab-window function, replaces an image with a link to a new tab-window, if the image is larger then a configured maximum size. The link could either be a standard image or, if computing resources are sufficient, it could be a small-rendered image of the original image. The original image will be displayed in a separate tab-window, either labelled with the original image name or an abbreviation of its name. Clicking on the inserted small image the tab-window displaying the image will be brought to the front.

A tab-window as described comprises normal browser windows accessible by a symbolical layout of the structure of the web page as well as windows similar to normal browser windows each one fitted with at least one tab to access other tab-windows or to access the navigation window.

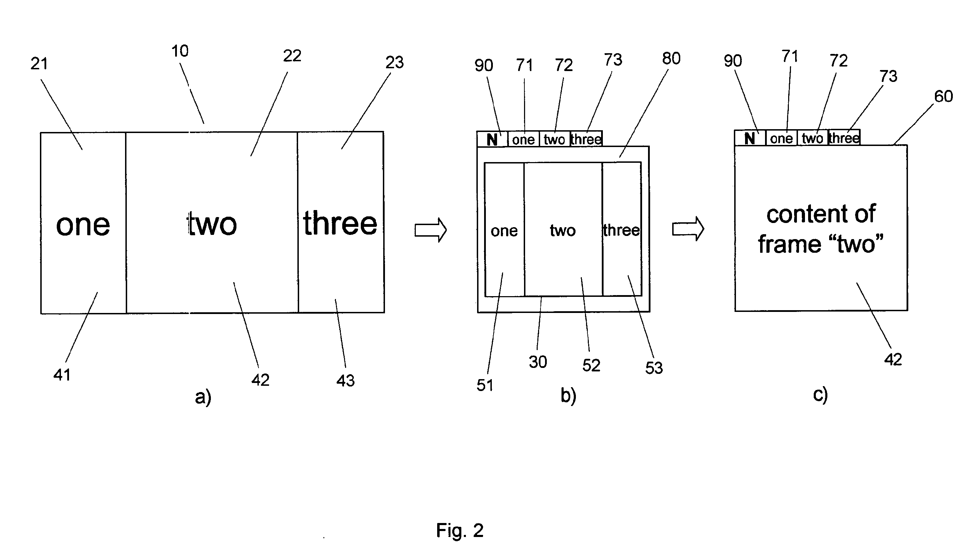

In Fig. 2a) a web page 10 is symbolical shown. The web page 10 consists of three frames 21, 22, 23. In step I of the method according to the invention such a web page will be subdivided into three different subparts 41, 42, 43 formed by the frames 21, 22, 23. In step II these subparts 41, 42, 43 are labeled with 'one', 'two' and 'three'.

Fig. 2b) shows a navigation window 80 displaying the symbolical layout 30 of the structure of the web page 10. The symbolical layout 30 shows symbolically the different subparts 41, 42, 43 the web page 10 has been subdivided into. Preferably the symbolical layout 30 is derived from the original layout of the web page 10, so that the arrangement of the different subparts 41, 42, 43 in the symbolic layout 30 corresponds to the structure of the web page. This enhances navigation through the content of the web page 10. Each symbol 51, 52, 53 on said symbolical layout 30 is assigned to a particular subpart 41, 42, 43 and by clicking on a symbol 51, 52, 53 the assigned subpart 41, 42, 43 is displayed in the browser window 60. In Fig. 2c) the subpart of the web page 10 actually displayed in the browser window 60 is the subpart 42 labelled with 'two'.

Furthermore for each subpart 41, 42, 43 a tab 71, 72, 73 with a label corresponding to the label ('one', 'two' and 'three') of the subpart 41, 42, 43 is placed on the browser window 60, wherein the different subparts 41, 42, 43 are accessed by clicking on the corresponding tab 71, 72, 73. An additional tab 90 labelled with 'N' is foreseen to switch the display in the browser window 60 to the symbolical layout 30.

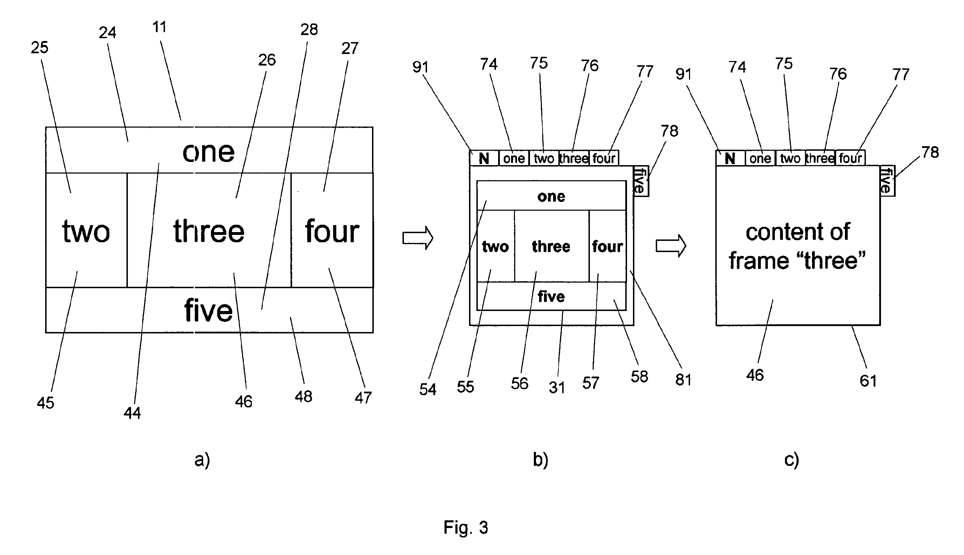

A more complex web page 11 is shown in Fig. 3a). The web page 11 consists of five frames 24, 25, 26, 27, 28. According to the invention, the web page 11 is subdivided into five different subparts 44, 45, 46, 47, 48 formed by the frames 24, 25, 26, 27, 28. The subparts 44, 45, 46, 47, 48 are labeled with 'one', 'two', 'three', 'four' and 'five'.

The symbolical layout 31 of the structure of the web page 11 is displayed in the navigation window 81 (Fig. 3b). The symbolical layout 31 shows symbolically the different subparts 44, 45, 46, 47, 48 the web page 11 has been subdivided into. Each symbol 54, 55, 56, 57, 58 on the symbolical layout 31 is assigned to a particular subpart 44, 45, 46, 47, 48. By clicking on a symbol 54, 55, 56, 57, 58 the assigned subpart 44, 45, 46, 47, 48 is displayed in the browser window 61. In Fig. 3c) the subpart of the web page 11 actually displayed in the browser window 61 is the subpart 46 labelled with 'three'.

Again for each subpart 44, 45, 46, 47, 48 a tab 74, 75, 76, 77, 78 with a label corresponding to the label ('one', 'two', 'three', 'four' and 'five') of the subpart 44, 45, 46, 47, 48 is placed on the browser window 61, wherein the different subparts 44, 45, 46, 47, 48 are accessed by clicking on the corresponding tab 74, 75, 76, 77, 78. An additional tab 91 labelled with 'N' is foreseen to switch the display in the browser window 61 to the symbolical layout 31.

It is important to mention that the proposed method eases reading of web-sites particularly on portable devices having a small display size. Said method is particularly easy to be implemented for web pages composed of different frames or tables. However using more complex algorithms, it is also possible to define other rules how a web page can be conveniently subdivided.

The method according to the invention subdivides a web page into different subparts, labels them and places them into different tabs of the web-browser. To ease navigation to the various subparts, an additional tab with the layout of the subdivided web page is given. The subparts of the web page can be easily reached by either clicking at the subpart-symbol in the navigation tab or by clicking on the related tab-label.

To switch between the individual subparts a scheme of the web page is displayed showing symbolical the arrangement of the subparts in relation to the structure of the web page, wherein by clicking on one of the symbols on said layout, each one assigned to one subpart, said particular subpart is displayed in the browser window.

### Commercial applicability:

The invention is commercially applicable particularly in the field of providing web pages to be displayed on computer like devices plus in the filed of production and operation of terminals like e.g. mobile devices to be used to display web pages, plus in the field of production and operation of servers providing such web pages to remotely attached terminals.

List of reference numerals
- 10,11: web page
- 21, 22, 23, 24, 25, 26, 27, 28: frame
- 30,31: symbolical layout
- 41,42,43,44,45,46,47,48: subpart
- 51, 52, 53, 54, 55, 56, 57, 58: symbol
- 60,61: browser window
- 71,72,73,74,75,76,77,78: tab
- 80,81: navigation window.
- 90, 91: tab

## Claims

1. Method for an appropriate presentation of a web page (10, 11) in a browser window, **comprising** the steps of
- subdividing the web page (10, 11) into different subparts (41, 42, 43, 44, 45, 46, 47, 48),
- displaying a subpart (41, 42, 43, 44, 45, 46, 47, 48) in the browser window (60, 61),
- wherein the display in the browser window (60, 61) can be switched from one subpart (41, 42, 43, 44, 45, 46, 47, 48) to another subpart (41, 42, 43, 44, 45, 46, 47, 48).

2. Method according to claim 1, **characterized in**
**that** to switch between the different subparts (41, 42, 43, 44, 45, 46, 47, 48) a scheme (30, 31) of the layout of the web page (10, 11) showing symbolically the different subparts (41, 42, 43, 44, 45, 46, 47, 48) is provided, wherein each symbol (51, 52, 53, 54, 55, 56, 57, 58) on said layout (30, 31) is assigned to a particular subpart (41, 42, 43, 44, 45, 46, 47, 48) and by clicking on a symbol (51, 52, 53, 54, 55, 56, 57, 58) the assigned subpart (41, 42, 43, 44, 45, 46, 47, 48) is displayed in the browser window (60, 61).

3. Method according to claim 2, **characterized in**
**that** the scheme (30, 31) is displayed in an own navigation window (80, 81), wherein the different subparts (51, 52, 53, 54, 55, 56, 57, 58) are accessed by clicking on the corresponding symbols (51, 52, 53, 54, 55, 56, 57, 58) in the navigation window (80, 81).

4. Method according to claim 1, 2 or 3, **characterized in**
**that** the different subparts (41, 42, 43, 44, 45, 46, 47, 48) are labelled.

5. Method according to claim 4, **characterized in**
**that** for each subpart (41, 42, 43, 44, 45, 46, 47, 48) a tab (71, 72, 73, 74, 75, 76, 77, 78) with a label corresponding to the label of the subpart (41, 42, 43, 44, 45, 46, 47, 48) is placed on the browser window (60, 61), wherein the different subparts (41, 42, 43, 44, 45, 46, 47, 48) are accessed by clicking on the corresponding tab (71, 72, 73, 74, 75, 76, 77, 78).

6. Method according to one of the previous claims, **characterized in**
**that** instead of displaying one subpart (41, 42, 43, 44, 45, 46, 47, 48) in the browser window (60, 61) each subpart (41, 42, 43, 44, 45, 46, 47, 48) is assigned to an own browser window (60, 61) and instead of switching the display in the browser window (60, 61) it can be switched between the browser windows (60, 61) assigned to different subparts (41, 42, 43, 44, 45, 46, 47, 48).

7. Method according to one of the previous claims, **characterized in**
**that** the web page (10, 11) is subdivided into its frames (21, 22, 23, 24, 25, 26, 27, 28) or into groups of its frames (21, 22, 23, 24, 25, 26, 27, 28), so that each frame (21, 22, 23, 24, 25, 26, 27, 28) or each group of frames (21, 22, 23, 24, 25, 26, 27, 28) forms a subpart (41, 42, 43, 44, 45, 46, 47, 48) of the web page (10, 11).

8. Method according to one of the previous claims, **characterized in**
**that** the web page (10, 11) is subdivided into its cells or into groups of its cells, so that each cell or each group of cells forms a subpart (41, 42, 43, 44, 45, 46, 47, 48) of the web page (10, 11).

9. Method according to one of the previous claims, **characterized in**
**that** pictures of the web page (10, 11) form subparts (41, 42, 43, 44, 45, 46, 47, 48) of the web page (10, 11).

10. Method according to one of the previous claims, **characterized in**
**that** subdivision is individually controllable by the user.

11. Terminal to be used to execute the method according to one of the claims 1 to 10, comprising a screen and means to display web pages on said screen, **characterized by**
means to subdivide a web page (10, 11) into different subparts (41, 42, 43, 44, 45, 46, 47, 48), means to display a subpart (41, 42, 43, 44, 45, 46, 47, 48) of said web page (10, 11) on said screen and means to switch the display from one subpart (41, 42, 43, 44, 45, 46, 47, 48) to another.

12. Server to be used to execute the method according to one of the claims 1 to 10, comprising means to display web pages on a screen, **characterized by**
means to subdivide a web page (10, 11) into different subparts (41, 42, 43, 44, 45, 46, 47, 48), means to display a subpart (41, 42, 43, 44, 45, 46, 47, 48) of said web page (10, 11) on said screen and means to switch the display from one subpart (41, 42, 43, 44, 45, 46, 47, 48) to another.

13. Computer program product stored on a computer usable medium comprising computer readable program means for causing a computer to perform the method of anyone of the claims 1 to 10, when said computer program product is executed on a computer.
